# EUROPÄISCHE PATENTSCHRIFT

(11) **EP 3 057 731 B1**
(45) Veröffentlichungstag und Bekanntmachung des Hinweises auf die Patenterteilung: **14.08.2019**
(21) Anmeldenummer: 14811751.8
(22) Anmeldetag: 13.10.2014
(51) Int. Cl.: B23B 31/00

(54) **BEARBEITUNGSWERKZEUG UND VERFAHREN ZUR HERSTELLUNG EINES BEARBEITUNGSWERKZEUGS**
MACHINING TOOL AND METHOD OF PRODUCING A MACHINING TOOL
OUTIL D'USINAGE ET PROCEDE DE FABRICATION D'UN OUTIL D'USINAGE

(30) Priorität: 16.10.2013 AT 3372013 U
(43) Veröffentlichungstag der Anmeldung: 24.08.2016
(73) Patentinhaber: Ceratizit Austria Gesellschaft M.b.H., 6600 Reutte (AT)
(72) Erfinder: GINTHER, Thomas, A-6645 Vorderhornbach (AT); SINGER-SCHNÖLLER, Alexander, A-6671 Weißenbach (AT)
(74) Vertreter: Ciesla, Dirk
(86) Internationale Anmeldenummer: PCT/AT2014/000182
(87) Internationale Veröffentlichungsnummer: WO 2015/054708

(56) Entgegenhaltungen:
- WO-A1-2012/075986
- WO-A1-2013/035619
- DE-A1- 10 121 986
- DE-C- 189 583
- US-A- 2 147 343
- US-A- 3 053 118
- US-A- 5 074 025

## Beschreibung

Die Erfindung betrifft ein Bearbeitungswerkzeug, insbesondere Schneid-, Bohr-, Fräs-, Dreh- und/oder Senkwerkzeug, und ein Verfahren zur Herstellung eines solchen Bearbeitungswerkzeugs.

US 5,074,025 A, die ein Bearbeitungswerkzeug gemäß dem Oberbegriff des Anspruchs 1 sowie ein Verfahren gemäß dem Oberbegriff des Anspruchs 8 offenbart, beschreibt eine Kombination aus Bohrer und Bohradapter, wobei der Bohrer einen Schaft mit einem freien Ende mit abgeflachten Seiten aufweist und der Bohradapter eine stirnseitige Öffnung hat. Der Schaft wird derart in die Öffnung eingebracht, dass die Seiten des Schaftes die Wände der Öffnung räumend verformen.

US 3,053,118 A beschreibt ein Verfahren zum Herstellen von Räumwerkzeugen, bei dem ein Schaft aus einem relativ weichen und kostengünstigen Stahl an einem Ende ein Loch mit rundem Querschnitt aufweist, in das ein Vorsprung eines Schneidenbereichs aus Hochgeschwindigkeitsstahl mit quadratischen Querschnitt eingepresst ist.

Zur Bearbeitung von Werkstücken werden verschiedene Bearbeitungswerkzeuge verwendet, wie z.B. Bohr- oder Fräswerkzeuge. Beispielsweise werden zur Gesteinsbearbeitung Bohrer aus Hartmetall verwendet, um die Lebensdauer des Bohrers zu erhöhen. Dabei kann der gesamte Bohrer oder zumindest der Schneidbereich des Bohrers aus Hartmetall hergestellt sein. Beispielsweise kann wie bei WO 2010/106117 A1 eine auswechselbare Hartmetallspitze lösbar am Schaft befestigt werden. Alternativ kann eine Hartmetallspitze an einen Bohrerschaft angelötet werden.

Es ist Aufgabe der Erfindung, ein kostengünstiges Bearbeitungswerkzeug und ein einfaches Verfahren zur Herstellung eines solchen Bearbeitungswerkzeugs bereitzustellen.

Diese Aufgabe wird mit den Merkmalen des Anspruchs 1 bzw. 8 gelöst.

Vorteilhafte Ausgestaltungen sind Gegenstand der Unteransprüche.

Ein Bearbeitungswerkzeug weist einen Werkzeugschaft mit einer axialen Aufnahmeöffnung und ein Schneidelement auf, das zumindest teilweise in die Aufnahmeöffnung eingepresst ist. Die Aufnahmeöffnung liegt dabei axial zur Arbeitsachse (z.B. Rotationsachse) des Bearbeitungswerkzeugs. Vorzugsweise ist das Bearbeitungswerkzeug ein Werkzeug zur spanabhebenden Bearbeitung von Metall. Beispielsweise ragt nach dem Einpressen das Schneidelement zumindest teilweise über den Werkzeugschaft hinaus, so dass mittels des Schneidelements ein Werkstück bearbeitet werden kann. Ein Bearbeitungswerkzeug ist beispielsweise ein rotationssymmetrisches Schneidwerkzeug wie ein Bohrer, ein Fräser oder ein Senkwerkzeug. Alternativ kann das Bearbeitungswerkzeug als stehendes Werkzeug ausgebildet sein wie z.B. ein Drehmeißel. Durch das Trennen des Bearbeitungswerkzeugs in einen Schaftteil und einen Schneidteil kann beispielsweise zur Herstellung des Schafts ein kostengünstiges Material (z.B. Stahl) verwendet werden und für das Schneidelement ein Hartstoff bzw. Hartmetall.

Der Querschnitt der Aufnahmeöffnung und der Querschnitt des eingepressten Teils des Schneidelements sind so ausgebildet, dass der Werkzeugschaft durch das Einpressen des Schneidelements plastisch verformt ist. Der Querschnitt der Aufnahmeöffnung liegt senkrecht zur (Rotations-)Achse des Werkzeugschafts und entspricht z.B. bei einer zylindrisch geformten Öffnung dem Durchmesser der Öffnung. Die plastische Verformung des Werkzeugschafts ist beim fertigen Bearbeitungswerkzeug deutlich am Gefügebild des plastisch verformten Materials des Schafts erkennbar bzw. mittels eines Gefügeschliffbildes nachweisbar.

Eine plastische Verformung tritt auf, wenn unter Krafteinwirkung die Fließgrenze des zu verformenden Stoffs überschritten wird und der Stoff nach der Krafteinwirkung bzw. nach Entlastung irreversibel verformt bleibt. Unterhalb der Fließgrenze treten keine oder nur elastische Verformungen auf. Durch das Einpressen (Krafteinwirkung) des Schneidelements in die Aufnahmeöffnung wird die Fließgrenze des Schaftmaterials überschritten, so dass sich der Werkzeugschaft (im Bereich der Aufnahmeöffnung) irreversibel verformt. Durch die plastische Verformung wird das Schneidelement mit dem Werkzeugschaft kraftschlüssig (über eine Presspassung) verbunden. Im Gegensatz zur konventionellen Presspassung, bei der genaue Toleranzen eingehalten werden müssen, um eine plastische Verformung der Werkstücke zu vermeiden, ist das beschriebene Bearbeitungswerkzeug bewusst plastisch verformt. Bei der Herstellung des Bearbeitungswerkzeugs ist das Übermaß für die Presspassung zwischen Schaft und Schneidelement extrem hoch ausgelegt, so dass im Gegensatz zur konventionellen Presspassung keine exakte Vorbearbeitung der zu fügenden Flächen notwendig ist. Beispielsweise ist kein Schleifen der Verbindungs- bzw. Anlageflächen des Schafts und Schneidelements notwendig, so dass sich die Herstellungszeit und damit die Herstellungskosten für das Bearbeitungswerkzeugs deutlich verringern.

Das Schneidelement ist aus einem Hartmetall oder Cermet ausgebildet und ist sinterroh eingepresst. D.h. das Schneidelement wird nach dem Sintern ohne mechanische Nachbearbeitung bzw. ungeschliffen in den Werkzeugschaft eingepresst. Wie oben beschrieben sind die Toleranzen der Presspassung hoch, so dass erst nach dem Einpressen des Schneidelements eine Endbearbeitung des Schneidelements erfolgt. Dadurch kann das Bearbeitungswerkzeug einfach und kostengünstig hergestellt werden.

Besonders bevorzugt ist der Aufnahmeöffnungsquerschnitt zwischen 1% bis 5% kleiner als der entsprechend gegenüberliegende Querschnitt des eingepressten Schneidelements, vorzugsweise mindestens 2% kleiner als der eingepresste Schneidelementquerschnitt. Das Schneidelement wird in die Aufnahmeöffnung eingepresst bis es eine Endposition erreicht. In dieser Endposition liegen sich entsprechende Abschnitte des eingepressten Schneidelements und des Aufnahmeöffnungsquerschnitts gegenüber. Diese gegenüberliegenden bzw. aneinander anliegenden Querschnitte weisen die oben genannte Toleranzen auf, bei der der jeweilige Abschnitt des Aufnahmeöffnungsquerschnitts zwischen 1% bis 5%, vorzugsweise mindestens 2% kleiner als der (in Endposition) gegenüberliegende Querschnitt des Schneidelements ist. Beispielsweise ist die Aufnahmeöffnung und der einzupressende Teil des Schneidelements zylindrisch ausgebildet, so dass (vor dem Einpressen) der (Innen-)Durchmesser der Aufnahmeöffnung 1-5% kleiner als der Außendurchmesser des Schneidelements ist. Beispielsweise weist eine zylindrisch ausgebildete Aufnahmeöffnung/-bohrung einen Durchmesser von 10 mm auf. Der Durchmesser des eingepresste Teils des Schneidelements hat dann ein Übermaß von z.B. 0,2 mm bzw. 2%. Entsprechend sind bei einer konischen oder stufenförmigen Ausgestaltung der jeweiligen Querschnitte, die in Endposition gegenüberliegenden Querschnitte der Aufnahmeöffnung und des Schneidelements so ausgebildet, dass sie die oben genannten Toleranzen aufweisen.

Gemäß einer Ausgestaltung ist zumindest der eingepresste Teil des Schneidelements sich zu seinem freien Ende verjüngend ausgebildet, beispielsweise kegelstumpfförmig. Die Aufnahmeöffnung ist entsprechend ausgebildet, so dass sich beim zusammengefügten (bzw. zusammengepressten) Bearbeitungswerkzeug die oben genannten Toleranzen der Querschnitte des Schafts und des Schneidelements zwischen 1% - 5% ergeben. D.h. die oben genannten Toleranzen beziehen sich auf die Querschnitte (bzw. gegenüberliegenden Anlageflächen) der Aufnahmeöffnung und des Schneidelements in Endposition (d.h. nach dem Einpressen).

Vorzugsweise ist am eingepressten Teil des Schneidelements zumindest ein Rückhalteelement (bzw. Formschlusselement) ausgebildet, insbesondere zumindest ein vorspringendes und/oder ein zurückspringendes Element. Beispielsweise kann ein zurückspringendes Rückhalteelement in Form von einer Rille, mehreren (umlaufenden) Rillen oder einzelnen bzw. lokalen Vertiefungen ausgebildet sein. Die Rückhalteelemente können z.B. bereits beim Pressen des Schneidelements (Grünlings) durch das Formwerkzeug ausgebildet werden. Beim Einpressen des Schneidelements in die Aufnahmeöffnung wird durch die plastische Verformung Schaftmaterial in die Vertiefungen eingepresst, so dass auf einfache Weise eine Verankerung des Schneidelements im Schaft erzeugt wird.

Gemäß einer Ausgestaltung ist umlaufend um die Aufnahmeöffnung eine Fase ausgebildet. Dadurch wird das Einführen des einzupressenden Schneidelements erleichtert. Zusätzlich oder alternativ ist umlaufend um das Ende der Schneidelements, das in die Aufnahmeöffnung eingesteckt bzw. eingepresst wird, eine Fase ausgebildet, um das Einführen des Schneidelements in die Aufnahmeöffnung zu vereinfachen. D.h. in diesen Ausgestaltungen bildet die Fase eine Einführhilfe.

Bevorzugt ist umlaufend um die Aufnahmeöffnung eine Fase ausgebildet, wobei an der gegenüberliegenden Anlagefläche des Schneidelements eine entsprechende Fase ausgebildet ist. D.h. nach dem Einpressen des Schneidelements liegen die Fasen(flächen) des Schneidelements und des Werkzeugschafts aneinander an. Durch die Fasen an den stirnseitigen bzw. axialen Anlageflächen des Werkzeugschafts und des Schneidelements wird die Kontaktfläche zwischen den beiden Elementen vergrößert und damit die Festigkeit der Verbindung erhöht.

Besonders bevorzugt weist der Werkzeugschaft und der aus dem Werkzeugschaft herausragende Teil des Schneidelements den gleichen oder im Wesentlichen gleichen Querschnitt auf. D.h. das Bearbeitungswerkzeug hat durchgehend den gleichen Querschnitt bzw. der Werkzeugschaft ragt in radialer Richtung nicht über das Schneidelement hinaus. Beispielsweise bei einem Bohrwerkzeug kann so (nahezu) die gesamte Länge des Werkzeugs verwendet werden, um möglichst tiefe Löcher zu bohren.

Vorzugsweise weist das Bearbeitungswerkzeug einen Bearbeitungsdurchmesser zwischen 5 mm bis 50 mm, vorzugsweise zwischen 8 mm bis 40 mm, besonders bevorzugt zwischen 10 mm bis 30 mm auf. Insbesondere ist bei geringeren Querschnitten bzw. Bearbeitungsdurchmessern die Herstellung eines Bearbeitungsmaterials aus Voll-Hartmetall kostengünstiger. Bei größeren Querschnitten ist die Verwendung von Wechsel- oder Wendeschneidplatten kostengünstiger.

Gemäß Anspruch 8 wird ein Verfahren zur Herstellung eines Bearbeitungswerkzeugs, insbesondere eines wie oben beschriebenen Bearbeitungswerkzeugs, bereitgestellt.

Vorzugsweise werden vor dem Einpressen die Anlageflächen zwischen Werkzeugschaft und Schneidelement nicht geschliffen. Insbesondere ist der einzupressende Bereich des Schneidelements nicht geschliffen. Wie oben beschrieben, ist die Presspassung zwischen Werkzeugschaft und Schneidelement so groß ausgelegt, dass eine präzise Bearbeitung der zu fügenden Flächen nicht notwendig ist. Vorzugsweise wird die Aufnahmeöffnung mittels Bohren ausgebildet und anschließend nicht weiter bearbeitet bzw. geschliffen.

Beispielsweise wird der Werkzeugschaft aus Stahl hergestellt, der gedreht und mit einer Bohrung (Aufnahmeöffnung) versehen wird. Das Schneidelement wird pulvermetallurgisch aus einem Ausgangsmaterial gepresst (Grünling) und anschließend gesintert (Sinterrohling). Anschließend wird der Sinterrohling ohne mechanische Nachbearbeitung in die Bohrung (Aufnahmeöffnung) eingepresst, wobei sich der Werkzeugschaft (im Bereich der Aufnahmeöffnung) plastisch verformt. Durch das Einsparen von Bearbeitungsschritten (z.B. Vorbearbeitung von Fügeflächen) und durch die deutlich geringeren Anforderungen an die Genauigkeit der der Passung zwischen Schaft und Schneidelement wird ein äußerst kostengünstiges Herstellungsverfahren bereitgestellt. Nach dem Einpressen können beispielsweise die Schneidkanten geschliffen werden. Anschließend kann das Schneidelement mit einer Hartstoffschicht beschichtet werden.

Anhand der Figuren werden Ausführungsformen der Erfindung näher erläutert.

Es zeigen:
- Fig. 1a-b: eine erste Ausgestaltung eines Bearbeitungswerkzeugs vor und nach dem Einpressen,
- Fig. 2a-b: eine zweite Ausgestaltung eines Bearbeitungswerkzeugs vor und nach dem Einpressen,
- Fig. 3a-b: eine dritte Ausgestaltung eines Bearbeitungswerkzeugs vor und nach dem Einpressen, und
- Fig. 4a-b: eine vierte Ausgestaltung eines Bearbeitungswerkzeugs vor und nach dem Einpressen.

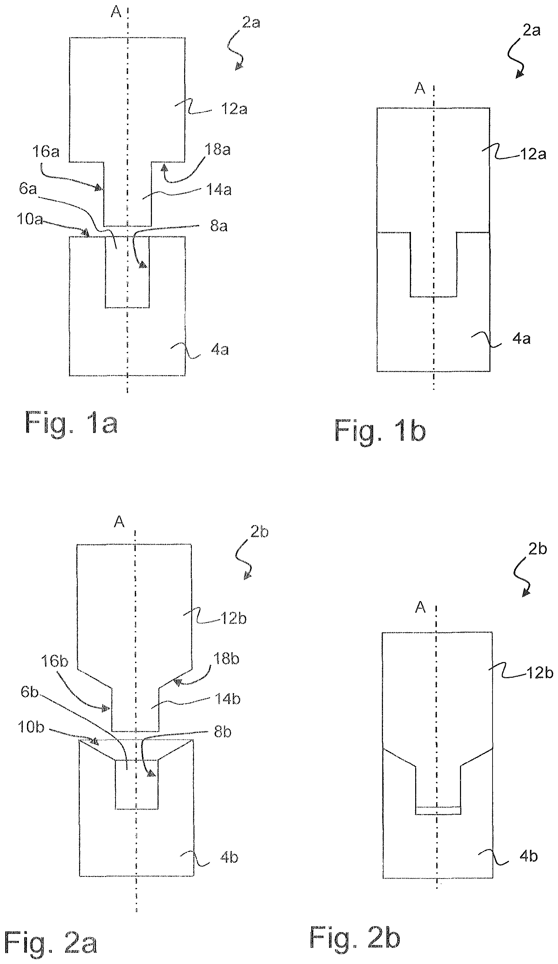

- Fig. 1a-b: zeigen eine schematische, nicht maßstabsgerechte erste Ausgestaltung eines Bearbeitungswerkzeugs 2a vor dem Einpressen (Fig. 1a) und nach dem Einpressen (Fig. 1b).

Das Bearbeitungswerkzeug 2a weist einen Werkzeugschaft 4a mit einer Aufnahmeöffnung 6a bzw. Bohrung in axialer Richtung A des Werkzeugs 2a auf. Die Achse A des Bearbeitungswerkzeugs 2a entspricht dabei der Rotationsachse bzw. Arbeitsachse des Werkzeugs 2a. Wenn das Bearbeitungswerkzeug 2a beispielsweise als Bohrer ausgebildet ist, dann entspricht die Achse A seiner Rotationsachse. Das Werkzeug 2a weist weiterhin ein Schneidelement 12a mit einem Zapfen 14a auf. Der Zapfen 14a bzw. der einzupressende Teil des Schneidelements wird bei der Herstellung des Bearbeitungswerkzeugs 2a in die Aufnahmeöffnung 6a eingepresst. Das Schneidelement 12a ist aus einem Hartmetall oder Cermet und der Schaft aus einem (plastisch verformbaren) Stahl hergestellt. Bei Hartmetall und Cermets handelt es sich jeweils um Materialien, bei denen Hartstoffteilchen in einem duktilen Bindermaterial eingebettet sind.

Die Abmessungen bzw. Querschnitte der Aufnahmeöffnung 6a und des Zapfens 14a sind dabei so ausgelegt, dass sich beim Einpressen des Zapfens 14a der Schaft 4a plastisch verformt. D.h. durch die Krafteinwirkung beim Einpressen wird das Material des Schafts 4a über seine Fließgrenze hinaus verformt, so dass der Schaft 4a nach dem Einpressen irreversibel verformt ist bzw. bleibt. D.h. zwischen Schneidelement 12a und Schaft 4a wird eine kraftschlüssige Verbindung mittels einer Presspassung erzeugt. Im Gegensatz zur konventionellen Presspassung ist hier eine plastische Verformung des Schafts 4a erwünscht. D.h. die Fertigungstoleranzen der Aufnahmeöffnung 6a und des Schneidelements 12a bzw. Zapfens 14a sind deutlich höher ausgelegt als bei einer konventionellen Presspassung. Beispielsweise ist der Querschnitt des (zylindrischen) Zapfens 14a zwischen 1%-5% größer als der Querschnitt bzw. Durchmesser der Aufnahmeöffnung 6a. Beispielsweise weist die zylindrisch ausgebildete Aufnahmeöffnung/-bohrung 6a einen Durchmesser von 10 mm auf. Der Durchmesser des eingepressten Zapfens 14a hat dann ein Übermaß von z.B. 0,2 mm bzw. 2%, d.h der Zapfendurchmesser beträgt 10,2 mm.

Beispielsweise kann die Aufnahmeöffnung 6a einfach mittels eines Bohrers hergestellt werden, wobei das Schneidelement 12a ohne weitere Bearbeitung der Aufnahmeöffnung 6a (bzw. der Bohrung) in die Aufnahmeöffnung 6a eingepresst werden kann. D.h. teure und zeitaufwendige Zwischenbearbeitungen wie z.B. Schleifen der Bohrung oder des Schneidelements 12a sind nicht notwendig.

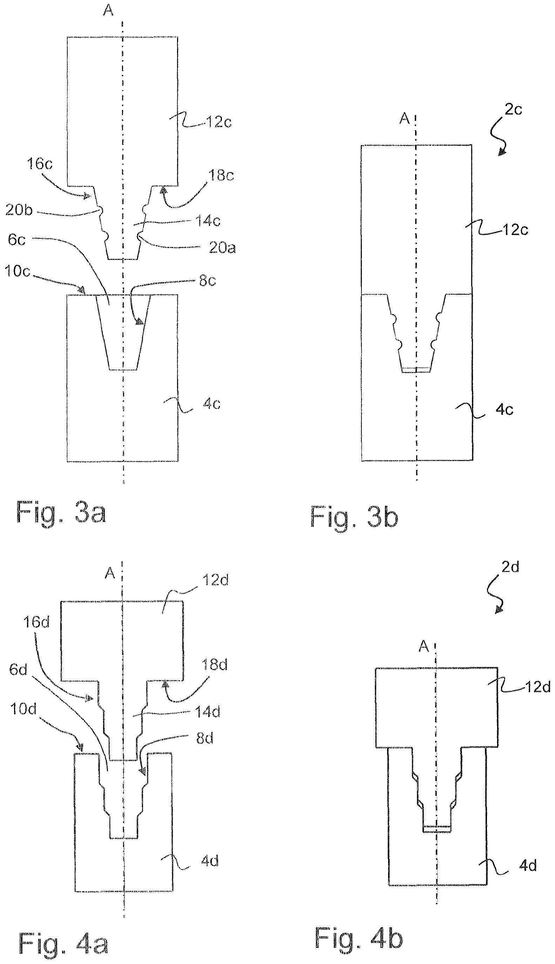

Alternativ kann wie in Fig. 3a-b und Fig. 4a-b dargestellt der Zapfen 14c-d sich zu seinem freien Ende verjüngend ausgebildet sein, beispielsweise konisch bzw. kegelstumpfförmig (Fig. 3a-b) oder sich stufenförmig verjüngend (Fig. 4a-b). Die jeweilige Aufnahmeöffnung 6c-d ist entsprechend ausgebildet, so dass sich beim zusammengefügten (bzw. zusammengepressten) Bearbeitungswerkzeug die oben genannten Toleranzen zwischen den Querschnitten des Schafts und des Schneidelements von 1% - 5% ergeben. D.h. die Toleranzen beziehen sich auf die Querschnitte (bzw. gegenüberliegenden Anlageflächen) der Aufnahmeöffnung 6c-d und des Schneidelements 12c-d in Endposition (d.h. nach dem Einpressen).

Das hartmetallische Schneidelement 12a wird pulvermetallurgisch hergestellt, d.h. zunächst wird durch Pressen der Ausgangsmaterialien ein Grünling hergestellt und dieser wird anschließend gesintert. Nach dem Sintern des Grünlings (bzw. des Schneidelements 12a) wird das sinterrohe Bauteil in den Schaft 4a eingepresst. Bei der Bereitstellung des Schneidelements 12a werden somit teure und zeitaufwendige (Zwischen-) Bearbeitungsschritte eingespart.

Fig. 1a und 1b zeigen eine Ausgestaltung des Bearbeitungswerkzeugs 2a mit zylindrischer Aufnahmeöffnung 6a bzw. zylindrischem Zapfen 14a. Das Schneidelement 12a weist eine radial nach außen weisende Anlagefläche 16a und eine (Stirn-)fläche 18a in axialer Richtung auf, die beim zusammengefügten Bearbeitungswerkzeug (Fig. 1b) an der radialen Anlagefläche 8a bzw. axialen (Stirn-)Anlagefläche 10a des Schafts 4a anliegen.

Wie in Fig. 1b zu sehen, ist die Aufnahmeöffnung 6a tiefer ausgebildet als der Zapfen 14a. So wird gewährleistet, dass nach dem Einpressen die axialen Stirnflächen 10a, 18a dicht aneinander anliegen bzw. an der Außenseite des Bearbeitungswerkzeugs keine Lücken entstehen.

Fig. 2a und 2b zeigen eine schematische, nicht maßstabsgerechte Darstellung eines Bearbeitungswerkzeugs 2b gemäß einer zweiten Ausgestaltung. Sofern nicht anders angemerkt, sind gleiche oder ähnliche Elemente mit gleichen oder ähnlichen Bezugszeichen versehen.

Im Unterschied zum oben beschriebenen Bearbeitungswerkzeug 2a ist bei dieser Ausgestaltung umlaufend um die Aufnahmeöffnung 6b (an der Stirnfläche 10b) eine Fase ausgebildet. Eine Fase mit entsprechender Neigung ist an der gegenüberliegenden Stirnfläche des Schneidelements 12b ausgebildet. D.h. die axialen Stirnflächen 10b, 18b des in Fig. 2a-b dargestellten Werkzeugs 2b weisen eine größere Fläche auf als die in Fig. 1a-b dargestellten Stirnflächen 10a, 18a. Durch die größere Stirnfläche wird eine größere Kontaktfläche bereitgestellt, die die Stabilität der Verbindung zwischen Schneidelement 12b und Schaft 4b erhöht.

Fig. 3a-b zeigen eine schematische, nicht maßstabsgerechte Darstellung eines Bearbeitungswerkzeugs 2c gemäß einer dritten Ausgestaltung. Sofern nicht anders angemerkt, sind gleiche Elemente mit den gleichen Funktionen mit gleichen Bezugszeichen versehen.

Im Unterschied zu den oben beschriebenen Ausgestaltungen 2a, 2b sind in Fig. 3a-b der Zapfen 14c und die Aufnahmeöffnung 6c sich zu dem jeweiligen freien Ende verjüngend ausgebildet. Dadurch wird das Einpressen des Schneidelements 12c in den Schaft 4c erleichtert, da Öffnung 6c und Zapfen 14c nicht exakt aufeinander ausgerichtet sein müssen und sich das Schneidelement 12c beim Einpressen selbst zentriert.

Als zusätzliche (optionale) Positionssicherung weist der Zapfen 14c Vertiefungen in Form von umlaufenden Rillen 20a-b auf, die axial zueinander versetzt angeordnet sind. Wie in Fig. 3b zu sehen ist, wird beim Einpressen durch das plastische Verformen des Schafts 4c Schaftmaterial in die Vertiefungen 20a-b eingepresst. Dadurch entsteht (zusätzlich zum Kraftschluss über die Presspassung) ein Formschluss zwischen Schneidelement 12c und Schaft 4c.

Fig. 4a-b zeigen eine schematische, nicht maßstabsgerechte Darstellung eines Bearbeitungswerkzeugs 2d gemäß einer vierten Ausgestaltung. Sofern nicht anders angemerkt, sind gleiche Elemente mit den gleichen Funktionen mit gleichen Bezugszeichen versehen.

Das Bearbeitungswerkzeug 2d weist einen Zapfen 14d auf, der zu seinem freien Ende verjüngend ausgebildet ist. Der Querschnitt des Zapfens 14d verjüngt sich stufenweise, wobei in dieser Ausgestaltung drei Stufen vorgesehen sind. Jede Stufe weist einen konstanten Querschnitt auf, wobei sich der Querschnitt von Stufe zu Stufe in Richtung des freien Endes des Zapfens 14d verringert. Die Aufnahmeöffnung 6d bzw. die radiale Anlagefläche 8d ist entsprechend stufenförmig ausgestaltet, so dass zwischen dem Zapfen 14d und der Aufnahmeöffnung 6d (in der in Fig. 4b dargestellten Endposition) eine Presspassung mit den oben beschriebenen Toleranzen bereitgestellt wird.

Wie in Fig. 4b zu sehen sind die Stufen im Werkzeugschaft 4d bzw. in der Aufnahmeöffnung so ausgebildet, dass nach dem vollständigen Einpressen (wenn die Stirnfläche 18d des Schneidelements 12d an der Stirnfläche 10d des Schafts 4d anliegt) zwischen den Stufen und am Ende des Zapfens 14d jeweils ein Hohlraum verbleibt. Die Hohlräume bieten Raum für Verunreinigung oder Späne, die eventuell beim Einpressen vom Zapfen 14d oder von der Fläche 8d abgeschabt werden. D.h. die Hohlräume gewährleisten, dass das Schneidelement 12d bzw. der Zapfen 12d problemlos und vollständig in die Öffnung 6d eingepresst werden kann.

Ein zylindrisch ausgebildeter Zapfen für eine zylindrische Aufnahmeöffnung kann ebenfalls mit Vertiefungen 20a-b versehen sein. Alternativ können beispielsweise statt umlaufender Vertiefungen 20a-b einzelne, lokale Vertiefungen oder auch Vorsprünge vorgesehen sein.

### Bezugszeichenliste

- 2a-d: Bearbeitungswerkzeug
- 4a-d: Werkzeugschaft
- 6a-d: Aufnahmeöffnung
- 8a-d: (radiale) Anlagefläche Schaft
- 10a-d: (axiale) Stirnanlagefläche Schaft
- 12a-d: Schneidelement
- 14a-d: eingeschobener Schneidelementteil / Zapfen
- 16a-d: (radiale) Anlagefläche Schneidelement
- 18a-d: (axiale) Stirnanlagefläche Schneidelement
- 20a-b: Rückhalteelement / Rückhaltenut

- A: Werkzeugachse / Antriebsachse

## Patentansprüche

1. Bearbeitungswerkzeug (2a-d), insbesondere Schneid-,Bohr-, Fräs-, Dreh- und/oder Senkwerkzeug, mit
einem Werkzeugschaft (4a-d), der eine axiale Aufnahmeöffnung (6a-d) aufweist, und
einem Schneidelement (12a-d), das zumindest teilweise in die Aufnahmeöffnung (6a-d) eingepresst ist,
wobei der Aufnahmeöffnungsquerschnitt und der eingepresste Schneidelementquerschnitt so ausgebildet sind, dass der Werkzeugschaft (4a-d) durch das Einpressen des Schneidelements (12a-d) plastisch verformt ist,
**dadurch gekennzeichnet, dass** das Schneidelement (12a-d) aus einem Hartmetall oder Cermet ausgebildet ist und sinterroh eingepresst ist.

2. Bearbeitungswerkzeug nach Anspruch 1, wobei der Aufnahmeöffnungsquerschnitt zwischen 1% bis 5% kleiner als der entsprechend gegenüberliegende Querschnitt des eingepressten Schneidelements ist, vorzugsweise mindestens 2% kleiner als der eingepresste Schneidelementquerschnitt ist.

3. Bearbeitungswerkzeug nach Anspruch 1 oder 2, wobei zumindest der eingepresste Teil des Schneidelements (12c-d) sich zu seinem freien Ende verjüngend ausgebildet ist, insbesondere kegelstumpfförmig oder im Wesentlichen kegelstumpfförmig ausgebildet ist.

4. Bearbeitungswerkzeug nach einem der vorhergehenden Ansprüche, wobei am eingepressten Teil des Schneidelements (12c) zumindest ein Rückhalteelement (20a-b) ausgebildet ist, insbesondere zumindest ein vorspringendes und/oder ein zurückspringendes Element.

5. Bearbeitungswerkzeug nach einem der vorhergehenden Ansprüche,
wobei umlaufend um die Aufnahmeöffnung (10b) eine Fase ausgebildet ist, und/oder
wobei umlaufend um das Ende der Schneidelements, das in die Aufnahmeöffnung eingesteckt bzw. eingepresst wird, eine Fase ausgebildet ist.

6. Bearbeitungswerkzeug nach einem der vorhergehenden Ansprüche, wobei der Werkzeugschaft (4a-d) und der aus dem Werkzeugschaft (4a-d) herausragende Teil des Schneidelements (12a-d) den Gleichen oder im Wesentlichen gleichen Querschnitt aufweisen.

7. Bearbeitungswerkzeug nach einem der vorhergehenden Ansprüche, wobei das Bearbeitungswerkzeug (2a-d) einen Bearbeitungsdurchmesser zwischen 5 mm bis 50 mm, vorzugsweise zwischen 8mm bis 40mm, besonders bevorzugt zwischen 10 mm bis 30 mm aufweist.

8. Verfahren zur Herstellung eines Bearbeitungswerkzeugs, insbesondere eines Bearbeitungswerkzeugs (2a-d) nach einem der vorhergehenden Ansprüche, wobei das Verfahren aufweist:
Bereitstellen eines Werkzeugschafts (4a-d) mit einer axialen Aufnahmeöffnung (6a-d),
Bereitstellen eines Schneidelements (12a-d),
Einpressen zumindest eines Teils des Schneidelements (12a-d) in die Aufnahmeöffnung (6a-d),
wobei der Aufnahmeöffnungsquerschnitt und der Schneidelementquerschnitt so ausgebildet sind, dass der Werkzeugschaft (4a-c) durch das Einpressen des Schneidelements (12a-c) plastisch verformt wird,
**dadurch gekennzeichnet, dass** das Schneidelement (12a-d) aus einem Hartmetall oder Cermet ausgebildet ist und sinterroh eingepresst wird.

9. Verfahren nach Anspruch 8, wobei
vor dem Einpressen die Anlageflächen (8a-d, 10a-d, 16a-d, 18a-d) zwischen Werkzeugschaft (4a-d) und Schneidelement (12a-d) nicht geschliffen werden, insbesondere die Aufnahmeöffnung (6a-c) nicht geschliffen wird, und/oder
die Aufnahmeöffnung (6a-d) mittels Bohren ausgebildet wird, wobei die Aufnahmeöffnung (6a-d) vor dem Einpressen nicht weiter bearbeitet wird, insbesondere nicht geschliffen wird.

10. Verfahren nach Anspruch 8 oder 9, wobei nach dem Einpressen der Aufnahmeöffnungsquerschnitt zwischen 1% bis 5% kleiner als der entsprechend gegenüberliegende Querschnitt des eingepressten Schneidelements ausgebildet ist, vorzugsweise mindestens 2% kleiner als der eingepresste Schneidelementquerschnitt.

## Claims

1. Machining tool (2a-d), in particular cutting, drilling, milling, turning and/or countersinking tool, having
a tool shank (4a-d), which has an axial accommodating opening (6a-d), and
a cutting element (12a-d), which is pressed at least to some extent into the accommodating opening (6a-d),
wherein the accommodating-opening cross section and the pressed-in cutting-element cross section are designed such that the tool shank (4a-d) is plastically deformed as a result of the cutting element (12a-d) being pressed in,
**characterized in that** the cutting element (12a-d) is formed from a cemented carbide or Cermet and is pressed in in an as-sintered state.

2. Machining tool according to Claim 1, wherein the accommodating-opening cross section is between 1% to 5% smaller than the correspondingly opposite cross section of the pressed-in cutting element, preferably is at least 2% smaller than the pressed-in cutting-element cross section.

3. Machining tool according to Claim 1 or 2, wherein at least the pressed-in part of the cutting element (12c-d) is designed to taper in the direction of its free end, in particular is of frustoconical, or essentially frustoconical, design.

4. Machining tool according to one of the preceding claims, wherein at least one retaining element (20a-b), in particular at least one projecting and/or one set-back element, is formed on the pressed-in part of the cutting element (12c).

5. Machining tool according to one of the preceding claims, wherein a chamfer is formed all the way around the accommodating opening (10b), and/or wherein a chamfer is formed all the way around that end of the cutting element which is fitted, or pressed, into the accommodating opening.

6. Machining tool according to one of the preceding claims, wherein the tool shank (4a-d) and that part of the cutting element (12a-d) which projects out of the tool shank (4a-d) have the same, or essentially the same, cross section.

7. Machining tool according to one of the preceding claims, wherein the machining tool (2a-d) has a machining diameter between 5 mm and 50 mm, preferably between 8 mm and 40 mm, particularly preferably between 10 mm and 30 mm.

8. Method for producing a machining tool, in particular a machining tool (2a-d) according to one of the preceding claims, wherein the method has the following steps:
providing a tool shank (4a-d), which has an axial accommodating opening (6a-d),
providing a cutting element (12a-d),
pressing at least part of the cutting element (12a-d) into the accommodating opening (6a-d),
wherein the accommodating-opening cross section and the cutting-element cross section are designed such that the tool shank (4a-c) is plastically deformed as a result of the cutting element (12a-c) being pressed in,
**characterized in that** the cutting element (12a-d) is formed from a cemented carbide or Cermet and is pressed in in an as-sintered state.

9. Method according to Claim 8, wherein
the abutment surfaces (8a-d, 10a-d, 16a-d, 18a-d) between the tool shank (4a-d) and cutting element (12a-d) are not ground, in particular the accommodating opening (6a-c) is not ground, prior to the pressing-in operation, and/or
the accommodating opening (6a-d) is formed by means of drilling, wherein the accommodating open (6a-d) is not subject to any further machining, in particular is not ground, prior to the pressing-in operation.

10. Method according to Claim 8 or 9, wherein, following the pressing-in operation, the accommodating-opening cross section is between 1% to 5% smaller than the correspondingly opposite cross section of the pressed-in cutting element, preferably is at least 2% smaller than the pressed-in cutting-element cross section.

## Revendications

1. Outil d'usinage (2a-d), en particulier outil de coupe, de perçage, de fraisage, de tournage et/ou de chanfreinage, comprenant
une tige d'outil (4a-d) qui présente une ouverture de réception axiale (6a-d), et
un élément de coupe (12a-d) qui est enfoncé au moins en partie dans l'ouverture de réception (6a-d),
la section transversale de l'ouverture de réception et la section transversale de l'élément de coupe enfoncée étant réalisées de telle sorte que la tige d'outil (4a-d) soit déformée plastiquement par l'enfoncement de l'élément de coupe (12a-d),
**caractérisé en ce que** l'élément de coupe (12a-d) est réalisé à partir d'un métal dur ou de cermet et est enfoncé sous forme brute de frittage.

2. Outil d'usinage selon la revendication 1, dans lequel la section transversale de l'ouverture de réception est inférieure de 1 % à 5 % à la section transversale opposée de manière correspondante de l'élément de coupe enfoncé, de préférence est inférieure d'au moins 2 % à la section transversale de l'élément de coupe enfoncée.

3. Outil d'usinage selon la revendication 1 ou 2, dans lequel au moins la partie enfoncée de l'élément de coupe (12c-d) est réalisée de manière à se rétrécir jusqu'à son extrémité libre, en particulier est réalisée sous forme tronconique ou essentiellement sous forme tronconique.

4. Outil d'usinage selon l'une quelconque des revendications précédentes, dans lequel au moins un élément de retenue (20a-b) est réalisé au niveau de la partie enfoncée de l'élément de coupe (12c), en particulier au moins un élément saillant et/ou se rétractant.

5. Outil d'usinage selon l'une quelconque des revendications précédentes, dans lequel un biseau est réalisé sur la périphérie autour de l'ouverture de réception (10b), et/ou dans lequel un biseau est réalisé sur la périphérie autour de l'extrémité de l'élément de coupe qui est enfoncée ou enfichée dans l'ouverture de réception.

6. Outil d'usinage selon l'une quelconque des revendications précédentes, dans lequel la tige d'outil (4a-d) et la partie de l'élément de coupe (12a-d) faisant saillie hors de la tige d'outil (4ad) présentent la même ou essentiellement la même section transversale.

7. Outil d'usinage selon l'une quelconque des revendications précédentes, l'outil d'usinage (2ad) présentant un diamètre d'usinage compris entre 5 mm et 50 mm, de préférence compris entre 8 mm et 40 mm, particulièrement préférablement compris entre 10 mm et 30 mm.

8. Procédé de fabrication d'un outil d'usinage, en particulier d'un outil d'usinage (2a-d) selon l'une quelconque des revendications précédentes, le procédé présentant les étapes suivantes :
fourniture d'une tige d'outil (4a-d) avec une ouverture de réception axiale (6a-d),
fourniture d'un élément de coupe (12a-d),
enfoncement d'au moins une partie de l'élément de coupe (12a-d) dans l'ouverture de réception (6a-d), la section transversale de l'ouverture de réception et la section transversale de l'élément de coupe étant réalisées de telle sorte que la tige d'outil (4a-c) soit déformée plastiquement par l'enfoncement de l'élément de coupe (12a-c),
**caractérisé en ce que** l'élément de coupe (12a-d) est réalisé à partir d'un métal dur ou de cermet et est enfoncé sous forme brute de frittage.

9. Procédé selon la revendication 8, dans lequel avant l'enfoncement, les surfaces d'appui (8a-d, 10a-d, 16a-d, 18a-d) entre la tige d'outil (4a-d) et l'élément de coupe (12a-d) ne sont pas meulées, en particulier l'ouverture de réception (6a-c) n'est pas meulée, et/ou
l'ouverture de réception (6a-d) est réalisée par perçage, l'ouverture de réception (6a-d) n'étant pas usinée davantage avant le pressage, en particulier n'étant pas meulée.

10. Procédé selon la revendication 8 ou 9, dans lequel après l'enfoncement, la section transversale de l'ouverture de réception est inférieure de 1 % à 5 % à la section transversale opposée de manière correspondante de l'élément de coupe enfoncé, de préférence est inférieure d'au moins 2 % à la section transversale de l'élément de coupe enfoncée.
